# EUROPEAN PATENT APPLICATION

(11) **EP 0 546 691 A2**
(43) Date of publication of application: **16.06.1993**
(21) Application number: 92310327.9
(22) Date of filing: 12.11.1992
(51) Int. Cl.: H04N 5/92, H04N 5/94

(54) **Digital recording and reproduction**

(30) Priority: 12.11.1991 KR 20052; 12.11.1991 KR 20054
(71) Applicant: SAMSUNG ELECTRONICS CO. LTD., Suwon-city, Kyounggi-do (KR)
(72) Inventor: Yun, Jong-kyung, Suwon, Kyungki-do (KR)
(74) Representative: Stanley, David William

(57) **Abstract**

Disclosed is a recording and reproducing method for use in a digital magnetic tape recording and/or reproducing apparatus for facilitating a variable speed reproduction. A variable length codified result of a DCT block is divided into first data having a predetermined length and including DC and low frequency components, and second data of a variable length having a high frequency component. The first and second data are edited and recorded on a particular block. During a normal reproduction, the first data and the second data both are used, thereby regenerating the original picture. During a variable speed reproduction, the first data only is used, thereby regenerating the original picture.

## Description

The present invention relates to recording and reproducing methods for use in digital magnetic tape recording and reproducing apparatus, and more particularly, relates to recording and reproducing methods for facilitating a variable speed reproduction.

Digital magnetic tape recording and reproducing apparatus converts a video signal into digital data and records the converted digital data on a recording medium. Compared with a conventional analog magnetic tape recording and reproducing apparatus, embodiments of digital magnetic tape recording and reproducing apparatus according to the present invention may have advantages in which signal to noise (S/N) ratio and resolution are increased and editing is facilitated.

One example of a digital video cassette recorder (VCR) as above converts an analog signal representing an original video signal into digital data and stores the converted digital data in a frame memory. The data stored in the frame memory is divided into a plurality of minimum unit blocks (for example, the magnitude is four lines by four samples), and then discrete cosine transform (DCT) and Huffman variable length coding (VLC) are performed, to compress the data. The compressed minimum unit blocks are added with respective error correction codes (inner codes), to be then reconstructed in a different frame memory as an original location. The minimum unit blocks of the vertical or horizontal direction in the reconstructed frame memory are also added with different error correction codes (outer codes). Also, the respective minimum unit blocks are added with block addresses and clock signals, to be then modulated and recorded on the tracks of a tape, in sequence. When reproducing, a pick-up signal generated in a head which scans the track is demodulated to reproduce the minimum unit blocks. The reproduced minimum unit blocks are recorded in the frame memory according to the respective block addresses. The minimum unit blocks recorded in the frame memory are error-corrected by means of the outer codes and inner codes. Then, with respect to the error-corrected minimum unit blocks, an inverse Huffman VLC and inverse DCT are performed. The inversely DCT operated digital data is converted into the analog signal, so as to regenerate the original video signal.

According to the DCT operation, the minimum unit block is transformed into a frequency function having a DC coefficient and a AC coefficient. The characteristic of the DCT operation resides in the fact that most of signal's energy is concentrated in the low frequency portion. Huffman VLC uses the zig-zag scanning method, to variably codify the coefficient portion of the frequency function. In view of the characteristic of VLC, differences in the length of the respective transformed codes are generated. These differences induce an undesired effect on the variable speed reproduction. That is, in the case of variable speed reproduction, it is required that the relative location of the block which is recorded on each track be fixed. As described above, if the VLC encoded minimum unit blocks have differing code lengths, the respective lengths occupied by the respective minimum unit blocks are not the same during a recording operation, thereby being unable to maintain the relative locations between blocks as fixed ones.

On the other hand, in a standard reproduction, the tape running system operates to exactly scan a single track of the tape by means of a reproduction head with respect to rotation of a drum. All data recorded on the tape are reproduced according to operation of the tape running system, to exactly reproduce the original video signal. However, in the variable speed reproduction, the tape running system operates so that the reproduction head transversely scans a plurality of the tracks. At this time, the picked-up signal has periodical envelopes of (S-1)/2 units, in which S represents a multiple speed. Also, in the level of the envelope, an effective area by the reproduction system, that is, a reproducible area, exists. The minimum unit blocks recorded on the tape belong to one of the larger frame blocks. Such frame blocks are separated by a frame synchronous signal. Thus, without the frame synchronous signal within the reproducible area, it becomes difficult to reproduce the data. The more frame synchronous pulses present within the reproducible area, the higher the reproduction rate is. However, since the recording period of the frame synchronous signal is the same, the data reproduction rate is constantly maintained. Accordingly, the quality of the reproduced picture is determined. As the variable reproduction speed increases, the reproducible area in the respective tracks transversely scanned by the reproduction head becomes narrower. Accordingly, the data reproduction rate becomes is lower.

Preferred embodiments of the present invention aim to provide a recording and reproducing method for reproducing an original video signal with only DC and low frequency components and excluding a high frequency component, during a variable speed reproduction.

It is another aim to provide a recording and reproducing method for enhancing the reproduction rate of recorded data during a variable speed reproduction.

It is still another aim to provide a method and an apparatus for facilitating error correction during a variable speed reproduction.

To accomplish the above first-mentioned aim, there is provided a recording and reproducing method which separates a result of the variable length codification of a DCT block into first data having a fixed length and including DC and low frequency components and second data including a high frequency component, and edits the separated first and second data into a particular block to record the edited block.

During a standard reproduction, the first data and the second data are used for reproducing the original video data, while during a variable speed reproduction, only the first data is used for reproducing the original data.

To accomplish the above second-mentioned aim, in a recording and reproducing method, video data of one frame is divided into smaller blocks (macro blocks) for recording the divided blocks.

To accomplish the above third-mentioned aim, in a recording and reproducing method, during a standard reproduction, error correction is performed by an inner code as well as an outer code, while during a variable speed reproduction, error correction is performed by an outer code.

In one recording method of the present invention, the video data transformed and encoded in units of minimum blocks are separated into first data including DC and low frequency components and second data including a surplus high frequency component to perform a variable coding operation, and the result is edited in the separated blocks for recording, thereby enabling to maintain the lengths of the blocks recorded on the tape as fixed lengths.

The relative locations of the blocks between the adjacent tracks on the tape may be fixed, thereby facilitating data processing to constitute a reproduced picture.

The frame video data may be divided into smaller blocks and added to the respective blocks with the synchronous signal for recording, thereby improving the data reproduction rate during the variable speed reproduction.

In examples of a method according to the present invention, error correction by means of the inner code is omitted during variable speed reproduction, thereby minimizing the data processing time.

According to one aspect of the present invention, there is provided a digital magnetic tape recording and reproducing method which uses a discrete cosine transform coding method and a variable length coding method, and comprises the steps of:
dividing a variable length codified result of a DCT block into first data having a predetermined length and including DC and low frequency components, and second data having a remaining code excluding said first data from said variable length codified result; and
recording low frequency blocks which include said first data on respective tracks of said magnetic tape in sequence, and recording high frequency blocks which include said second data having a relationship of duality with said first data including a high frequency component at the end of the track:
wherein, during normal reproduction, said low frequency blocks and said high frequency blocks are all used, thereby reproducing an original picture, and during a variable speed reproduction, said low frequency blocks only are used, thereby reproducing the original picture.

Preferably, said low frequency blocks are of the same length.

Preferably, said low frequency blocks comprise a plurality of said first data.

According to another aspect of the present invention, there is provided a digital magnetic tape recording and reproducing method for use in a digital magnetic tape recording and reproducing apparatus, said method comprising the steps of:
dividing one frame of video data into a plurality of macro blocks having smaller sizes; and
adding the respective divided macro blocks with sync data and a block address for recording:
wherein, during a variable speed reproduction, a data reproduction rate by means of a reproduction head is enhanced.

Preferably, each said macro block comprises an error correction code including an inner code and an outer code.

According to a further aspect of the present invention, there is provided a digital magnetic tape recording and reproducing method including an error correction code having an inner code and an outer code, said method comprising the steps of:
performing an error correction by means of an inner code and an outer code during normal reproduction; and
performing an error correction by means of only said inner code during a variable speed reproduction.

According to another aspect of the present invention, there is provided a method of recording a signal in digital form on a recording medium, comprising those steps of a method according to any of the preceding aspects of the invention that are necessary to record a signal suitable to be reproduced by a method according to the or each such aspect.

According to another aspect of the present invention, there is provided a method of reproducing a signal which has been recorded in digital form on a recording medium by a method according to any of the preceding aspects of the invention, comprising those steps of the method according to the or each such aspect that are necessary to reproduce a signal.

The invention also extends to recording apparatus, reproducing or recording/reproducing apparatus adapted to perform a method according to any of the preceding aspects of the invention.

For a better understanding of the invention, and to show how the same may be carried into effect, reference will now be made, by way of example, to the accompanying diagrammatic drawings, in which:
Figure 1 is a block diagram showing the general constitution of one example of a conventional digital magnetic tape recording apparatus;
Figures 2A through 2C illustrate DCT coding and Huffman variable coding operations;
Figure 3 shows formats in which minimum unit blocks having variable length codes of irregular sizes are sequentially recorded on the tracks;
Figures 4A through 4C show a relationship between the envelope waveform of a picked-up signal and the size of a recorded unit block during a variable speed reproduction;
Figure 5 shows a format of block data added with an error correction code in Figure 1;
Figures 6A through 6D show one example of data separation in a method according to the present invention;
Figure 7 shows a format in which first data and second data of Figures 6A through 6D are recorded on tracks;
Figure 8 shows an envelope waveform supplied from a reproduction head when a tape recorded by the recording format of Figure 7 during a variable speed reproduction is scanned;
Figures 9A and 9B show a format of block data added with error correction code in another embodiment of the present invention;
Figure 10 shows a format for recording macro blocks shown in Figures 9A and 9B on tape; and
Figure 11 is a block diagram of one example of a digital magnetic tape recording and reproducing apparatus adopting an error correction method for a variable speed reproduction of the present invention.

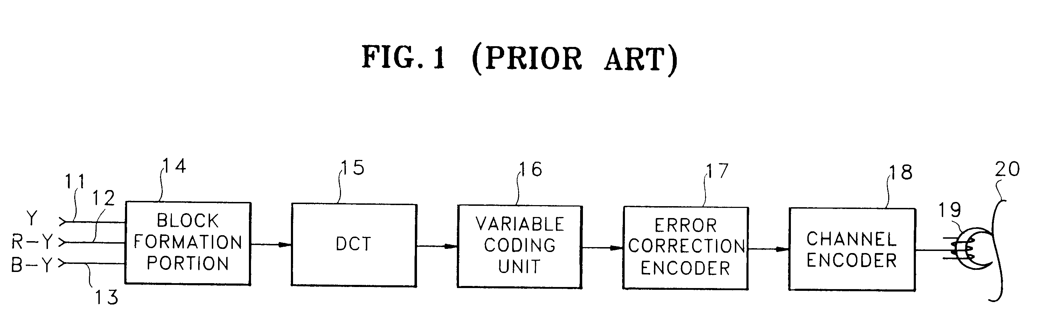

Referring to Figure 1 in which a general constitution of a conventional digital magnetic tape recording apparatus is shown, reference numeral 11 designates a first input terminal for receiving a luminance signal Y. Reference numerals 12 and 13 designate a second input terminal and a third input terminal for receiving colour difference signals R-Y and B-Y, respectively. The input video signals Y, R-Y and B-Y are converted into a plurality of minimum unit blocks comprising sampling values specified as the respective blocks in a block formation portion 14, for example, sixteen units of the sampling values (four lines by four samples). In a DCT unit 15, a discrete cosine transform (DCT) is performed. In variable length coding unit 16, the transformed result is encoded. The encoded minimum unit blocks are added with error correction codes in a error correction encoder 17. This data is controlled by channel encoder 18 so that colour difference signals between the tracks are alternated, thereby being recorded on a tape 20 through a recording head 19.

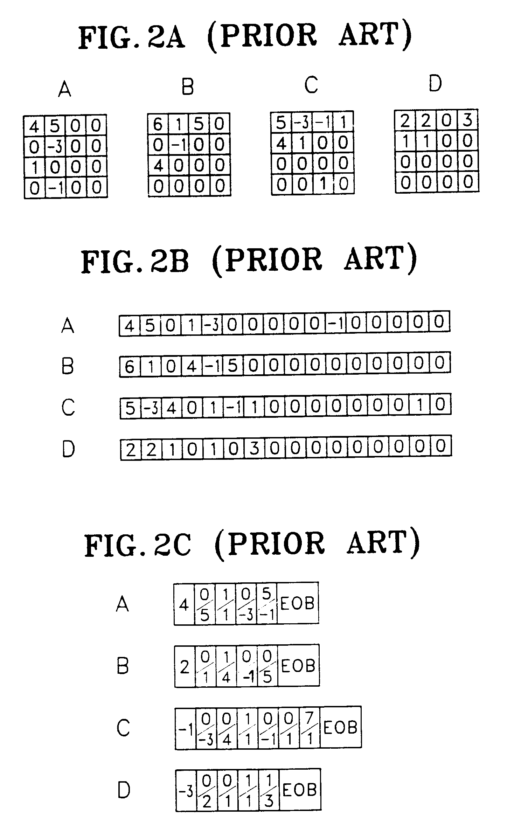

Figure 2A shows a quantizing coefficient of the DCT block transformed in DCT unit 15 of Figure 1. As shown in Figure 2A, for convenience of explanation, the size of the DCT block is assumed to be four lines by four samples. Here, with respect to well-known processes such as separation of the luminance and colour difference signals, division of the blocks, and DCT operation, detailed explanations are omitted.

The above DCT coefficient is classified into DC and AC components, and as it becomes more distanced from the DC component, the coefficient of a higher frequency component appears. Generally, when the picture data is discrete-cosine transform operated, coefficients of the low frequency portions among the DC and AC components are important factors for deciding picture quality. Here, the magnitude of the coefficients are much larger than those of the high frequency portions. That is, the coefficients of the low frequency portions near the DC components have a greater probability of the presence of non-zero's, which means that as the frequency component of the DCT coefficient becomes higher, so does the probability of zero's. Also, when the DCT coefficients are encoded, continuous zero-value coefficients increase the efficiency of codification. For this purpose, a re-arrangement method conventionally known as zig-zag scanning is used.

Figure 2B shows the result of zig-zag scanning of the DCT coefficients shown in Figure 2A. The DCT coefficients show that the non-zero coefficients are concentrated on the upper-left side (Figure 2A). Accordingly, when the DCT coefficients are re-arranged, the coefficients of the upper-left side are firstly re-arranged, and then the coefficients of the centre and the lower-right side are in turn re-arranged. Accordingly, the probability that zero-value coefficients will be adjacently re-arranged is increased. The DCT coefficients re-arranged as described above are variably encoded in the coding unit.

Figure 2C shows the result after variably encoding the respective blocks shown in Figure 2B. When variably encoded, predictive coding is performed between the adjacent blocks in the DC coefficients, while two-dimensional Huffman coding is performed by the continuous zero run length and the classified value in the AC coefficients. As shown in Figure 2B, after zig-zag scanning and re-arranging the DCT coefficients of the respective minimum unit blocks, the last non-zero coefficient can randomly appear. Thus, the lengths of the respective variably encoded blocks are irregular. When the blocks having such irregular lengths are recorded on the track, since the relative locations between the respective blocks are not fixed, it is difficult to perform reliably data reproduction during variable speed reproduction.

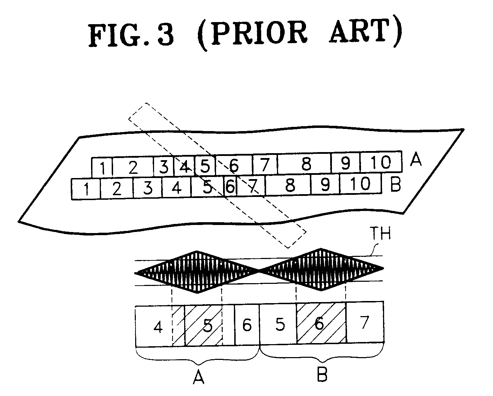

Figure 3 shows one example of a recording format which sequentially records minimum unit blocks having irregular sizes on a track. As shown in Figure 3, the relative locations between the corresponding minimum unit blocks on the track are irregular. During a variable speed reproduction, the reproduction head transversely scans the tracks with a constant angle by means of the operation of the tape running system. As shown in Figure 3, if the relative locations of the corresponding blocks in the respective tracks are irregular, the relative locations of the read blocks become irregular, thereby creating difficulties in regenerating the original picture. Thus, the sizes of the respective blocks to be recorded must be fixed. In this case, the sizes of the respective blocks become an important factor in the data reproduction rate during variable speed reproduction.

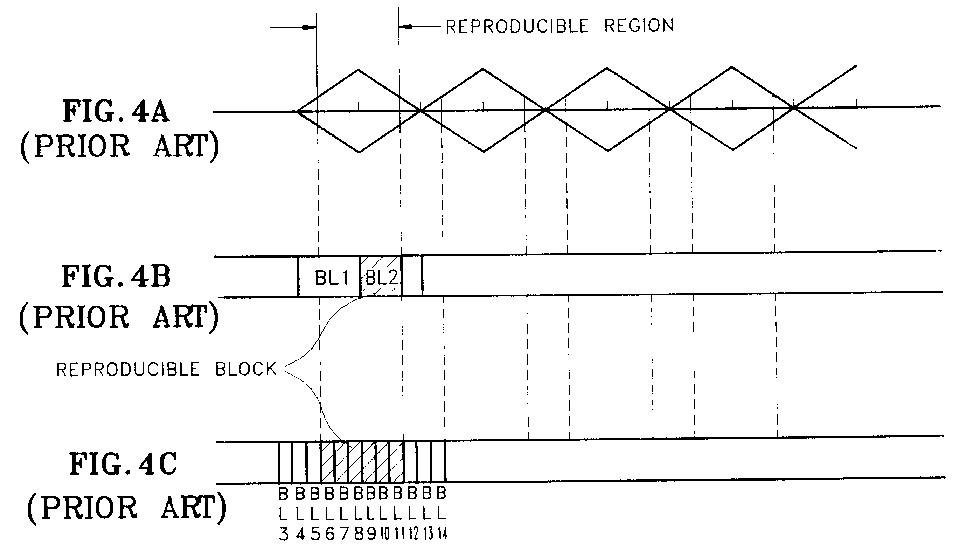

Figures 4A through 4C show a relationship between the envelope waveform of the picked-up signal and the size of the recorded unit block during a variable speed reproduction.

In Figure 4A, since it is impossible to generate the data due to the degradation of the S/N ratio in case of the lower portion of the amplitude in the picked-up signal, the reproducible areas are formed in the boundary of the reproducible amplitude level.

As shown in Figure 4B, in the case that the recorded data block is large, only part of the recorded data blocks are reproduced. For example, in a first block BL1, the data cannot be reproduced since a sync portion does not exist, while in a second block BL2, it is difficult to reproduce the signal since only the oblique portion is reproduced even though the sync portion exists. On the other hand, as shown in Figure 4C, when the sizes of the recorded data blocks are small, most of the recorded data blocks are reproduced. For example, with respect to reproducible areas of the same size shown in Figure 4B, the blocks from sixth block BL6 to eleventh block BL11 can be reproduced. Thus, during the variable speed reproduction, small recorded data blocks are advantageous over large recorded data blocks.

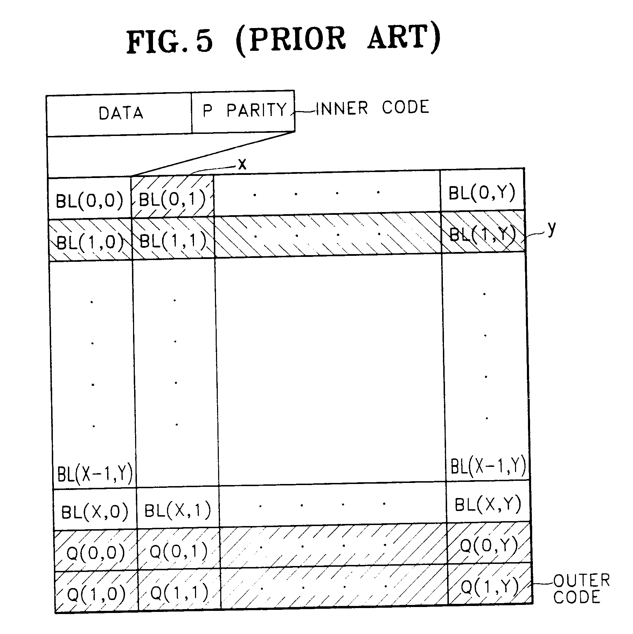

Figure 5 shows a format of the data structure added with the error correction code in Figure 1. In the system which uses data compression as in digital magnetic tape recording and reproducing apparatus; the error correction method is very important. The reason is that the propagation effect due to the loss of a single bit of information is very large. Conventionally, the compressed data in each of the unit blocks is added, in the horizontal direction, with a Reed-Solomon code word which is called an inner code, and is added with another Reed-Solomon code word which is called an outer code, in the vertical direction. During reproduction, error detection and correction are firstly performed by the outer code, so as to perform burst error detection and correction. Then, the error detection and correction with respect to random errors are performed by the inner code. According to the error detection and correction method described above, as shown in designation of X of Figure 5, the random error generated in the unit block is corrected by the inner code. At the samde time, the respective unit blocks within the burst error region with respect to the burst error generated in the plurality of the blocks in the horizontal direction (designated "Y" in Figure 5) are processed as random errors of the vertical direction, thereby enabling error detection and correction.

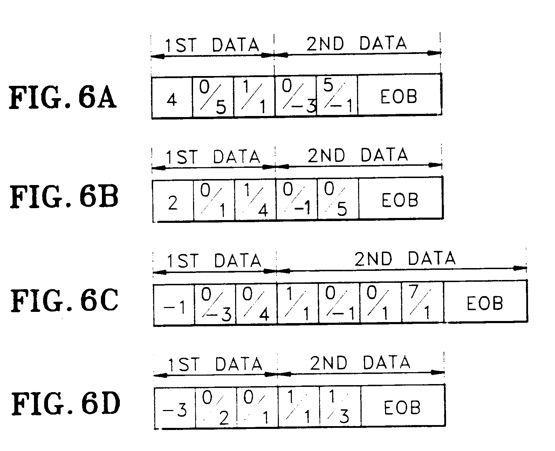

Figures 6A through 6D are views showing one embodiment of the present invention. According to this digital magnetic tape recording and reproducing method, the variable length encoded DCT coefficients are divided into a portion having a predetermined fixed bit length (first data) and the remaining portion having a variable bit length (second data). Thus, the DC and the low frequency components are included in the first data and the high frequency component is included in the second data. In the first data, the frequency component capable of being included is variable. This is determined by a continuous zero-run length in the result of zig-zag scanning. When the length of the code undergoing the variable length encoding operation is longer than that of the code which may be occupied by the first data, the excess portion is classified into the second data. The lengths of the first and the second data should be carefully decided considering the relative location between the blocks included in the readable area of the reproduction head and the resolution during variable speed reproduction. The first data should be determined as being more than an average minimum length, considering the overall DCT block. Also, the second data may be set to a maximum length in case coefficients of all the frequency components of a DCT block are not zeros. However, for the purpose of distributing the optimum bit amount, the second data may be set to an average maximum length and may be determined as being limited to a predetermined frequency component.

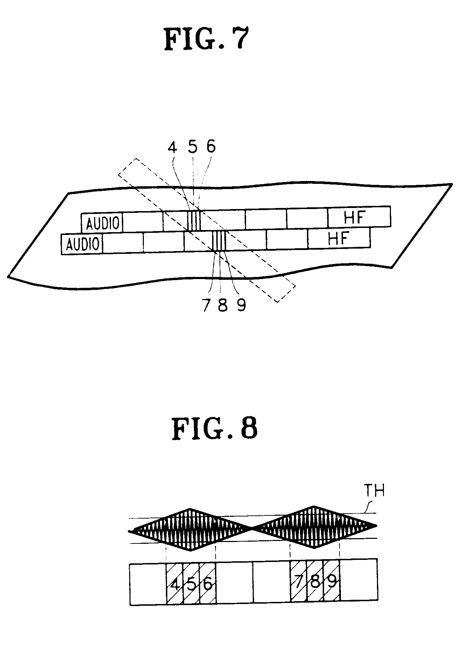

Figure 7 shows a format in which the first and second data shown in Figures 6A through 6D are recorded on tape. Along the direction of the scanning of the track, on the first half of the track, the first data of each DCT block is sequentially recorded, and on the particular block HF in the latter half of the track, the second data making a couple in cooperation with the first data is edited and recorded. Since each of the first data recorded on the track has a fixed length, the relative location between the tracks becomes fixed.

Figure 8 shows an envelope waveform of the reproduction signal when the reproduction head scans the tape recorded as shown in Figure 7 during a variable speed reproduction. In the present example, since the recording operation is performed, considering the number of the blocks capable of being included in the read-enable area of the reproduction head and the relative locations of the corresponding blocks between the tracks during the variable speed reproduction, the number of the blocks and the relative location included in the respective envelope waveform are constant.

The reproduction method for facilitating variable speed reproduction according to the present embodiment uses the first data and the second data during a standard reproduction, thereby regenerating the original picture, while during the variable speed reproduction, only the first data is used, thereby regenerating the original picture. That is, during the variable speed reproduction, the high frequency component which does not greatly influence picture quality is not reproduced. Here, only the DC and low frequency components which do greatly influence upon the picture quality are reproduced, thereby regenerating the original picture.

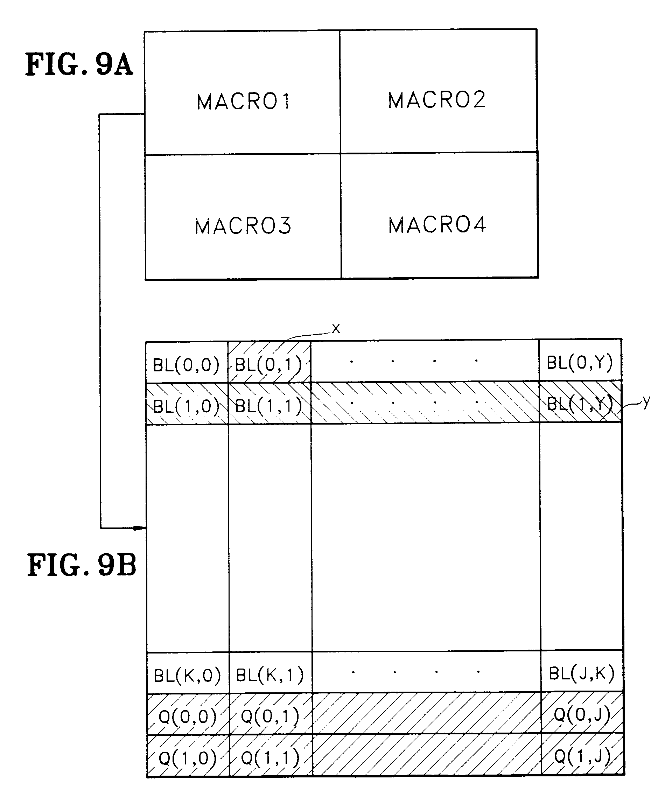

Figures 9A and 9B shows another embodiment of the present invention. In Figure 9A, one frame of video data is divided into a plurality of smaller blocks (macro blocks). In Figure 9B, each of the macro blocks is composed of a plurality of minimum unit blocks having an inner code (P parity) and an outer code (Q parity) corresponding to the minimum unit blocks of the vertical direction. In such a recording method, as designated by the symbol x of Figure 9B, the random error generated in the minimum unit block is corrected by the inner code. At the same time, as designated by the symbol y of Figure 9B, the respective minimum unit blocks within the burst error region with respect to the burst error generated in the plurality of the minimum unit blocks in the horizontal direction are processed as random errors of the vertical direction, thereby enabling error detection and correction.

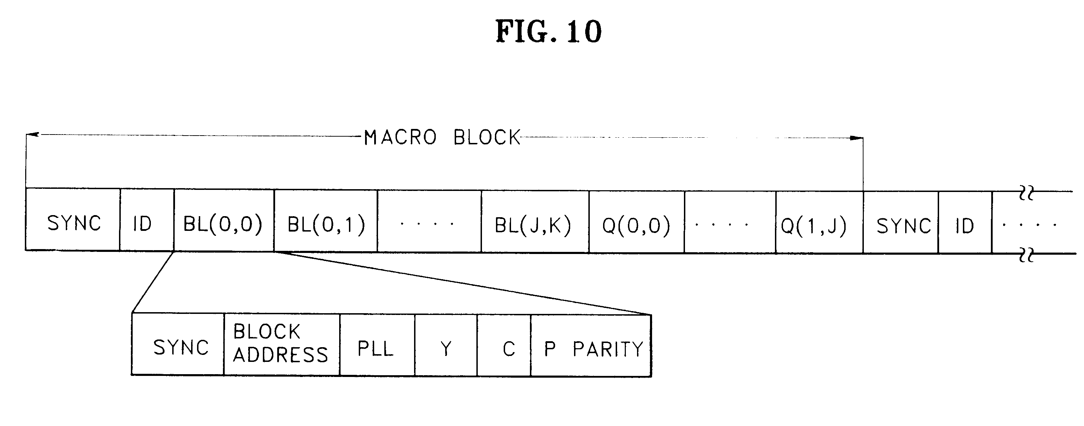

Figure 10 shows a format for recording the macro blocks shown in Figures 9A and 9B on tape. Each of the macro blocks has sync data, macro block address data, and a plurality of minimum unit blocks. Also, each of the minimum unit blocks is composed of sync data, block address data, PLL data, luminance signal data, chrominance signal data and an inner code (P parity).

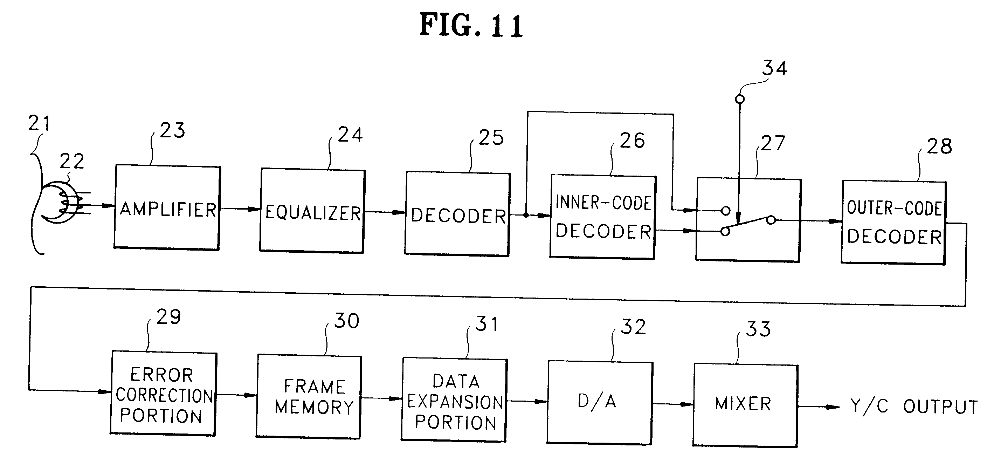

Figure 11 is a block diagram of one example of a digital magnetic tape recording and reproducing apparatus adopting an error correction method for variable speed reproduction, according to the present invention. In Figure 11, reference numeral 21 indicates a tape on which digital data is recorded, 22 is a reproduction head, 23 is an amplifier for converting the level of the picked-up signal, 24 is an equalizer for emphasizing the high frequency portion of the picked-up signal, 25 is a decoder which ordinarily uses a differentiation method, 26 is an inner code decoder, 27 is change-over switch, 28 is an outer code decoder, 29 is an error detection and correction portion, 30 is a frame memory portion, 31 is a data expander, 32 is a digital/analog converter, and 33 is a luminance and chrominance signal restoration portion. Particularly, change-over switch 27 includes a control terminal, to which a variable speed mode signal PB/PS is applied through a control input terminal 34.

In operation of the apparatus Figure 11, during normal reproduction, change-over switch 27 is connected to the PB side, according to variable speed mode signal PB/PS applied to control input terminal 34. Thus, both inner code decoder 26 and outer code decoder 28 are operated. Accordingly, the error detection and correction with respect to random error x and burst error y shown in Figure 9B are performed. On the other hand, during variable speed reproduction, change-over switch 27 is connected to the PS side, according to variable speed mode signal PB/PS applied to control input terminal 34. Thus, inner code decoder 26 does not operate and only outer code decoder 28 operates. Accordingly, the error detection and correction with respect to random error x shown in Figure 9B is not performed and the error detection and correction with respect to only burst error y shown in Figure 9B is performed.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A digital magnetic tape recording and reproducing method which uses a discrete cosine transform coding method and a variable length coding method, and comprises the steps of:
dividing a variable length codified result of a DCT block into first data having a predetermined length and including DC and low frequency components, and second data having a remaining code excluding said first data from said variable length codified result; and
recording low frequency blocks which include said first data on respective tracks of said magnetic tape in sequence, and recording high frequency blocks which include said second data having a relationship of duality with said first data including a high frequency component at the end of the track:
wherein, during normal reproduction, said low frequency blocks and said high frequency blocks are all used, thereby reproducing an original picture, and during a variable speed reproduction, said low frequency blocks only are used, thereby reproducing the original picture.

2. A digital magnetic tape recording and reproducing method as claimed in claim 1, wherein said low frequency blocks are of the same length.

3. A digital magnetic tape recording and reproducing method as claimed in claim 1 or 2, wherein said low frequency blocks comprise a plurality of said first data.

4. A digital magnetic tape recording and reproducing method for use in a digital magnetic tape recording and reproducing apparatus, said method comprising the steps of:
dividing one frame of video data into a plurality of macro blocks having smaller sizes; and
adding the respective divided macro blocks with sync data and a block address for recording:
wherein, during a variable speed reproduction, a data reproduction rate by means of a reproduction head is enhanced.

5. A digital magnetic tape recording and reproducing method as claimed in claim 4, wherein each said macro block comprises an error correction code including an inner code and an outer code.

6. A digital magnetic tape recording and reproducing method including an error correction code having an inner code and an outer code, said method comprising the steps of:
performing an error correction by means of an inner code and an outer code during normal reproduction; and
performing an error correction by means of only said inner code during a variable speed reproduction.

7. A method of recording a signal in digital form on a recording medium, comprising those steps of a method according to any of the preceding claims that are necessary to record a signal suitable to be reproduced by a method according to the or each such claim.

8. A method of reproducing a signal which has been recorded in digital form on a recording medium by a method according to any of the preceding claims, comprising those steps of the method according to the or each such claim that are necessary to reproduce a signal.

9. Recording apparatus adapted to perform a method according to claim 7.

10. Reproducing or recording/reproducing apparatus adapted to perform a method according to claim 8 or claims 7 and 8.
